# EUROPÄISCHE PATENTSCHRIFT

(11) **EP 1 217 280 B1**
(45) Veröffentlichungstag und Bekanntmachung des Hinweises auf die Patenterteilung: **14.02.2007**
(21) Anmeldenummer: 01128916.2
(22) Anmeldetag: 05.12.2001
(51) Int. Cl.: F16L 11/12, F16L 33/00, F16L 33/24

(54) **Schlauch aus flexiblem Material**
Hose made of flexible material
Tuyau flexible fabriqué en un matériau souple

(30) Priorität: 20.12.2000 DE 10063641
(43) Veröffentlichungstag der Anmeldung: 26.06.2002
(73) Patentinhaber: VERITAS AG, 63571 Gelnhausen (DE)
(72) Erfinder: Emmrich, Michael, 63589 Linsengericht (DE); Koestler, Thomas, 63571 Gelnhausen (DE); Weitzel, Kai, 63589 Linsengericht (DE)
(74) Vertreter: Grünecker, Kinkeldey, Stockmair & Schwanhäusser Anwaltssozietät

(56) Entgegenhaltungen:
- EP-A- 0 844 426
- DE-A- 2 028 710
- DE-A- 2 214 753
- DE-A- 2 920 259
- DE-A- 19 543 318
- DE-A- 19 639 055
- DE-U- 29 707 540
- FR-A- 2 748 311
- US-A- 4 526 410
- US-A- 5 266 262
- US-A- 5 333 650

## Beschreibung

Die vorliegende Erfindung bezieht sich auf einen Schlauch aus flexiblem Material mit einer Kupplungseinrichtung, die an dessen zumindest einem Endabschnitt dauerhaft angebracht ist, die einen zylindermantelförmigen Halteabschnitt aufweist, der an die Außenkontur des Schlauches angepasst ist und den Schlauch wenigstens abschnittsweise in Axialrichtung überlappt, wobei die Kupplungseinrichtung zumindest abschnittsweise aus thermoplastischem Kunststoff besteht und an dem Schlauch durch Spritzgießen angebracht ist, die Kupplungseinrichtung einen zweiten Halteabschnitt an der Innenseite des Schlauchs aufweist und der erste und der zweite Halteabschnitt über einen sich durch eine Durchgangsöffnung im Schlauch erstreckenden Steg einstückig miteinander verbunden sind. Die Erfindung bezieht sich weiterhin auf ein Verfahren zur Herstellung eines derartigen flexiblen Schlauchs mit einer Kupplungseinrichtung.

Ein derartiger Schlauch ist bereits aus der US 5 333 650 A bekannt. Diese Druckschrift beschreibt einen Schlauch aus flexiblem Material an dessen zumindest einem Endabschnitt eine Kupplungseinrichtung dauerhaft abgebracht ist, die einen zylindermantelförmigen Halteabschnitt aufweist, der an die Außenkontur des Schlauches angepasst ist. Die Kupplungseinrichtung weist einen zweiten Halteabschnitt an der Innenseite des Schlauchs auf. Der erste und der zweite Halteabschnitt sind über einen sich durch eine Durchgangsöffnung im Schlauch erstreckenden Steg miteinander verbunden.

Ein Schlauch wird auch in der US 4 526 410 A beschrieben. Diese Druckschrift beschreibt eine Steckvorrichtung aus Kunststoff für Schläuche. Ein Halteabschnitt ist an die Außen- und Innenkontur des Schlauches angepasst. Der Halteabschnitt überlappt den Schlauch wenigstens abschnittsweise in Axialrichtung. Eine Steckvorrichtung, die aus PVC besteht, ist an der äußersten Schicht des Schlauches durch Spritzgießen angebracht.

Schläuche aus flexiblem Material, an denen eine Kupplungseinrichtung angebracht ist, sind auch aus DE 197 43 825 bekannt. Der dort beschriebene Schlauch verfügt an seinem Endabschnitt über eine Kupplungseinrichtung, die zum axialen Einschieben in ein dazu passendes Kupplungsgegenstück vorgesehen ist. Die Kupplungseinrichtung und das Kupplungsgegenstück bilden zusammen eine Schlauchkupplung. Derartige Schläuche werden beim Automobilbau eingesetzt. Bei dem Schlauch kann es sich z.B. um einen Ansaugschlauch für Fahrzeugmotoren handeln. Die Kupplungseinrichtung wird durch ein tiefgezogenes Metallelement gebildet, welches den Schlauch sowohl an seiner Außenseite wie auch seiner Innenseite in der Art einer Manschette umfasst. Das Metallelement verfügt über ringförmig verlaufende Wülste, die das Material des flexiblen Schlauchs deformieren, um dadurch einen Formschluss zwischen dem Schlauch und dem Metallelement zu bilden. Im Bereich der Stirnseite des Schlauchs bildet dieses Metallelement zusätzlich eine ringförmige Nut zur Aufnahme eines Dichtringes. Um eine möglichst dichte Verbindung bei der in das Kupplungsgegenstück eingeschobenen Kupplungseinrichtung zu erzielen, verläuft das Metallstück im Querschnitt gesehen ununterbrochen von der Außenseite zur Innenseite des Schlauches hin. Zwar hat sich ein solcher Schlauch hinsichtlich der Dichtheit und der Festigkeit der Verbindung zwischen Kupplungseinrichtung und Schlauch bewährt, andererseits ist seine Herstellung sehr aufwändig.

Aufgabe der Erfindung ist es daher, die Herstellung eines Schlauchs zu vereinfachen und dennoch eine ausreichende feste Verbindung zwischen Schlauch und Kupplungseinrichtung sowie eine wirkungsvolle Abdichtung zu verwirklichen.

Die Aufgabe wird erfindungsgemäß gelöst durch einen Schlauch der eingangs genannten Art, bei dem auch der zweite Halteabschnitt zylindermantelförmig ist.

Diese Lösung ist einfach und hat den Vorteil, dass durch das Spritzgießen eine wirkungsvolle Abdichtung zwischen dem Schlauch und der Kupplungseinrichtung realisierbar ist. Gleichzeitig eignet sich Spritzgießen zum Herstellen der erfindungsgemäßen Schläuche in großen Stückzahlen bei entsprechend kostengünstiger Herstellung. Zudem lässt sich durch das Spritzgießen eine große Festigkeit der Verbindung zwischen dem Schlauch und der Kupplungseinrichtung verwirklichen. Auch lassen sich komplizierte geometrische Querschnitte durch Spritzgießen problemlos realisieren.

Dadurch, dass die Kupplungseinrichtung einen zweiten Halteabschnitt an der Innenseite des Schlauches aufweist ist es möglich, den Schlauch sowohl an der Innenseite, wie auch an seiner Außenseite mit der Kupplungseinrichtung zu verbinden. Zum einen lässt sich dadurch die Dichtwirkung verbessern, zum anderen kann auch die Festigkeit der Verbindung zwischen Schlauch und Kupplungseinrichtung gesteigert werden.

Durch einstückiges Verbinden des ersten und des zweiten Halteabschnittes über einen sich durch eine Durchgangsöffnung im Schlauch erstreckenden Steg kann die Herstellung des erfindungsgemäßen Schlauchs vereinfacht werden. Durch die Durchgangsöffnung im Schlauch kann Kunststoff von der Außenseite auf einfache Weise ins Innere des Schlauches gebracht werden. Gleichzeitig kann ein Formschluss zwischen Schlauch und den Halteabschnitten erzeugt werden.

Da der erste und der zweite Halteabschnitt zylindermantelförmig sind, lassen sich besonders einfache Geometrien verwirklichen.

Auch kann es sich als vorteilhaft erweisen, wenn die Kupplungseinrichtung vollständig aus thermoplastischem Kunststoff besteht. So lässt sich die gesamte Kupplungseinrichtung kostengünstig aus einheitlichem Material herstellen.

Als thermoplastischer Kunststoff kann sich Polyamid eignen. Dieser Werkstoff ist sowohl hinsichtlich der Festigkeit, wie auch der Verarbeitbarkeit vorteilhaft.

Alternativ kann sich als thermoplastischer Kunststoff auch Polyphtalamid (PPA), Polyehtylensulfid (PPS) oder ein verstärkter Kunststoff eignen.

Um die Verbindung zwischen dem Schlauch und dem Kupplungseinrichtung zu verbessern, kann zwischen Halteabschnitt und dem Schlauch ein Haftvermittler vorgesehen sein. Auf diese Weise lässt sich eine stoffschlüssige Verbindung zwischen Schlauch und Kupplungseinrichtung erzielen, so dass sowohl die Dichtheit als auch die Stabilität verbessert werden.

Auch kann es sich als günstig erweisen, wenn der Schlauch mehrschichtig aufgebaut ist, wobei die dem Halteabschnitt benachbarte Schicht aus einem mit dem Kunststoff der Kupplungseinrichtung stoffschlüssig verbindbaren Kunststoff besteht. Dadurch lässt sich die Dichtheit und die Festigkeit verbessern.

Es kann sich auch als vorteilhaft erweisen, wenn der Abstand zwischen den beiden Halteabschnitten geringer als die Wandstärke des Schlauches vor dem Anbringen der Kupplungseinrichtung ist. Auf diese Weise lässt sich eine kraftschlüssige Verbindung zwischen dem Kupplungseinrichtung und dem Schlauch verwirklichen. Dadurch, dass der Abstand der beiden Halteabschnitten geringer als die Wandstärke des Schlauches vor dem Anbringen der Kupplungseinrichtung ist, kann ein Einklemmen des Schlauches erfolgen.

Noch einfachere Geometrien lassen sich verwirklichen, wenn der Schlauch zylinderrohrförmig ist.

Von Vorteil kann es dabei auch sein, wenn die Außenkontur des Stegs im Wesentlichen der Innenkontur der Durchgangsöffnungen entspricht. Auch dadurch lässt sich auf einfache Weise ein Formschluss zwischen Schlauch und Halteabschnitten erzeugen.

Die Durchgangsöffnung lässt sich auf einfache Weise z.B. durch Bohren verwirklichen, wenn die Durchgangsöffnung im Wesentlichen zylindrisch ist.

In einer vorteilhaften Weiterbildung der Erfindung kann die Kupplungseinrichtung eine Rastelementeinrichtung, vorzugsweise eine Rastnase aufweisen. Dadurch lässt sich eine wirkungsvolle Verbindung zwischen der Kupplungseinrichtung und einem Kupplungsgegenstück verwirklichen.

In einer vorteilhaften Weiterbildung der Erfindung kann der Schlauch an seiner Außen- und/oder Innenseite im Bereich des Endabschnitts zumindest einen Vorsprung und/oder eine Vertiefung zur formschlüssigen Verbindung mit der Kupplungseinrichtung aufweisen. Durch solch einen Formschluss lässt sich die Festigkeit der Verbindung zwischen Schlauch und Kupplungseinrichtung zusätzlich steigern.

Weiterhin wird ein Verfahren zum Herstellen eines erfindungsgemäßen flexiblen Schlauchs mit einer Kupplungseinrichtung beansprucht, bei dem der Schlauch vor dem Anspritzen der Kupplungseinrichtung formstabilisiert wird. Durch solch eine Formstabilisierung des flexiblen Schlauches lässt sich die Genauigkeit beim Anbringen der Kupplungseinrichtung verbessern. Der formstabilisierte Schlauch kann genau in die Form zum Spritzgießen eingesetzt werden. Dadurch lässt sich sowohl die Festigkeit, wie auch die Dichtheit der Verbindung zwischen Schlauch und Kupplungseinrichtung steigern.

Als vorteilhaft kann es sich dabei erweisen, wenn das Formstabilisieren durch Kühlen erfolgt. Durch starkes Abkühlen wird der flexible Kunststoff des Schlauchs härter, er hat daher eine geringere Tendenz auszuweichen, wenn er in die Form eingesetzt wird.

In einer Ausführungsform der Erfindung kann das Formstabilisieren durch Umwickeln des Endabschnitts mit einem Draht unter Spannung erfolgen. Dadurch lässt sich der Endabschnitt im Bereich der Kupplungseinrichtung sozusagen versteifen. Durch die Drahtwicklung ergibt sich gleichzeitig ein Formschluss zwischen Schlauch und Kupplungseinrichtung nach dem Anbringen der Kupplungseinrichtung

Günstig kann es zudem sein, wenn zwischen Halteabschnitt und Schlauch ein Haftvermittler vorgesehen ist.

Nachfolgend wird die Erfindung anhand eines Ausführungsbeispiels näher erläutert. Es zeigen:
- Fig. 1: einen Schlauch mit Kupplungseinrichtung in einer Schnittansicht entlang der Linie I-I aus Fig. 2;
- Fig. 2: den Schlauch aus Fig. 1 in einer Vorderansicht;
- Fig. 3: einen erfindungsgemäßen Schlauch mit Kupplungseinrichtung in einer Schnittansicht entlang der Linie IV-IV aus Fig 4;
- Fig. 4: den Schlauch aus Fig. 3 in einer Vorderansicht.

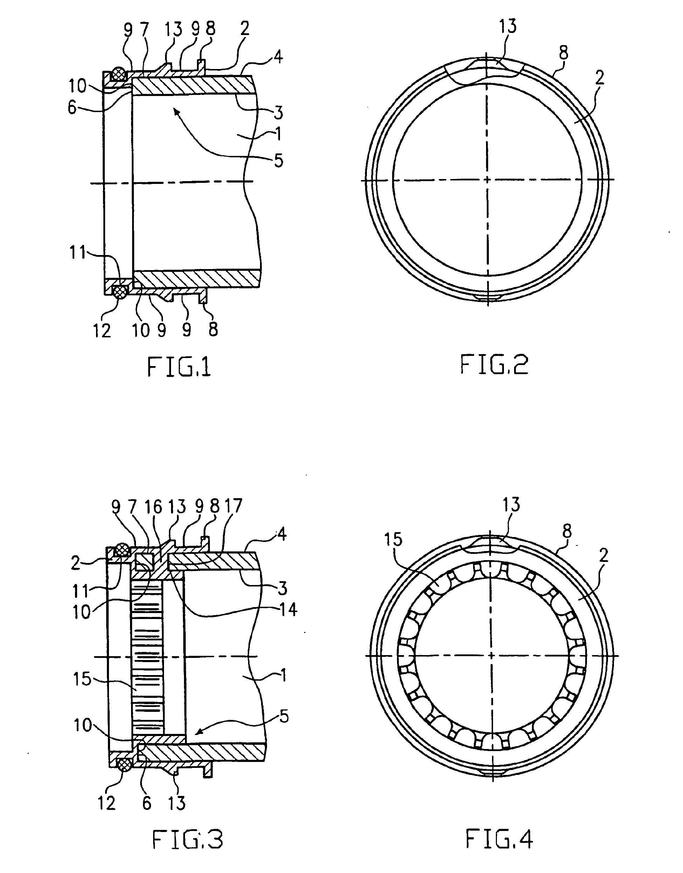

Fig. 1 zeigt einen Schlauch 1 mit einer Kupplungseinrichtung 2, der nicht Gegenstand der Erfindung ist.

Der Schlauch 1 ist ein Ansaugschlauch, wie er für Kraftfahrzeugmotoren verwendet wird. Er ist mehrschichtig aufgebaut. Derartige Schläuche sind aus dem Stand der Technik allgemein bekannt. Die einzelnen Schichten des Schlauches bestehen überwiegend aus elastomeren Materialien, wodurch sich die Flexibilität des Schlauches ergibt. Zusätzlich können textile Verstärkungsschichten in den Schichtaufbau des Schlauches 1 integriert sein. Dies ist jedoch aus dem Stand der Technik bekannt und muss daher nicht näher erläutert werden. Der Schlauch 1 verfügt über eine Innenseite 3, eine Außenseite 4, jeweils aus elastomeren Material und über einen Endabschnitt 5 mit Stirnseite 6. Der Schlauch 1 ist im Wesentlichen zylinderrohrförmig ausgebildet.

Die Kupplungseinrichtung 2 ist im Bereich des Endabschnitts 5 des Schlauches 1 angeordnet und verfügt über einen Halteabschnitt 7, der zylindermantelförmig ausgebildet ist und an der Außenseite 4 des Schlauches 1 angeordnet ist und diesen in Axialrichtung überlappt. Der Innendurchmesser des Halteabschnittes 7 entspricht dabei im Wesentlichen dem Außendurchmesser der Außenseite 4. Die Innenkontur des Halteabschnitts ist dadurch an die Außenkontur des Schlauches angepasst.

Weiterhin verfügt die Kupplungseinrichtung über einen Ringflansch 8, der als Anschlag eines nicht dargestellten Gegenstücks einer Kupplung dient, in die die Kupplungseinrichtung 2 zum Anschließen des Schlauches einsteckbar ist. Im Wesentlichen parallel zum Halteabschnitt 7 erstreckt sich eine Kupplungsfläche 9, die eine axiale Führung der Kupplungseinrichtung 2 beim Einstecken in ein Kupplungsgegenstück übernimmt.

Im Bereich der Stirnseite 6 des Schlauches 1 verfügt die Kupplungseinrichtung 2 über eine Anschlagfläche 10, an der die Stirnseite des Schlauches 1 sich zumindest abschnittsweise in Axialrichtung abstützt. Zusätzlich verfügt die Kupplungseinrichtung 2 über eine umlaufende Nut 11, in der ein Dichtring 12 angeordnet ist. Dieser Dichtring erstreckt sich in radialer Richtung geringfügig über die Kupplungsfläche 9 hinaus, um bei in das Kupplungsgegenstück eingesteckte Kupplungseinrichtung 2 mit dieser abdichtend in Anlage zu gelangen.

Die Kupplungseinrichtung 2 verfügt darüber hinaus über eine Rasteinrichtung 13 in Form einer Rastnase. Bei eingestecktem Kupplungselement greift ein weiteres Rastelement des Kupplungsgegenstücks in diese Rastnase, um dadurch ein Herausfallen des Schlauches aus dem Kupplungsgegenstück zu verhindern. In der Darstellung in Fig. 1 verfügt die Kupplungseinrichtung 2 sowohl an der Oberseite, wie auch der Unterseite über eine solche Rastnase.

Die Kupplungseinrichtung 2 ist aus Polyamid, vorzugsweise PA6.6 hergestellt. Zwischen dem Halteabschnitt 7 der Kupplungseinrichtung 2 und der Außenseite 4 des Schlauches 1 befindet sich ein Haftvermittler. Bei diesem Haftvermittler handelt es sich um Chemosil 256. Dadurch ergibt sich eine besonders feste und dichte Verbindung zwischen dem Halteabschnitt 7 und der Außenseite 4 des Schlauches 1.

Zur Herstellung des Schlauches 1 mit Kupplungseinrichtung 2 wird zunächst auf den Schlauch 1 der Haftvermittler aufgebracht. Der Schlauch mit Haftvermittler wird danach in eine Form eingebracht, in der die Kupplungseinrichtung 2 durch Spritzgießen an dem Schlauch 1 angebracht wird. Nach dem Anspritzen der Kupplungseinrichtung 2 ergibt sich wegen des Schrumpfverhaltens des Schlauchs eine feste Verbindung in radialer Richtung zwischen der Kupplungseinrichtung 2 und dem Schlauch 1 durch einen Kraftschluss in axialer Richtung zwischen Schlauch und Kupplungseinrichtung. Durch den Haftvermittler wird sowohl die Dichtigkeit, wie auch die Festigkeit der Verbindung zwischen Kupplungseinrichtung 2 und Schlauch 1 verbessert.

Nachfolgend wird der erfindungsgemäße Schlauch näher erläutert. Da dieser Schlauch Teile des oben beschriebenen Schlauchs enthält, wird der erfindungsgemäße Schlauch nur noch anhand der Unterschiede gegenüber dem in Fig. 1 und Fig. 2 dargestellten Schlauch erläutert. Gleiche Teile sind mit gleichen Bezugszeichen gekennzeichnet.

Gemäß der vorliegenden Erfindung verfügt der in Fig. 3 und 4 dargestellte Schlauch 1 zusätzlich zum ersten Halteabschnitt 7 über einen zweiten Halteabschnitt 14, der sich zylindermantelförmig parallel zum ersten Halteabschnitt 14 und parallel zur Innenseite 3 des Schlauches erstreckt, wobei die Innenkontur des Schlauches an die Außenkontur des Halteabschnitts angepasst ist und der Halteabschnitt den Schlauch in Axialrichtung überlappt. Der Abstand in radialer Richtung zwischen dem ersten Halteabschnitt 7 und dem zweiten Halteabschnitt 14 ist geringfügig kleiner, als die Wandstärke des Schlauches 1 in radialer Richtung im Bereich des Endabschnitts. Dadurch lässt sich eine kraftschlüssige Verbindung zwischen dem Schlauch und der Kupplungseinrichtung 2 erzielen.

Zusätzlich sind Versteifungen 15 vorgesehen, die sich im Bereich des Endabschnitts im Inneren des zweiten Halteabschnitts 14 erstrecken und die von im Wesentlichen halbzylindrischer Form sind.

Weiterhin sind der erste Halteabschnitt 7 und der zweite Halteabschnitt 14 durch einen Steg 16 einstückig miteinander verbunden. Dieser Steg 16 erstreckt sich durch eine zylindrische Durchgangsöffnung 17 im Schlauch 1. Die Durchgangsöffnung kann durch Bohren hergestellt werden. Durch die Durchgangsöffnung des Steges ist es leichter möglich, den Kunststoff auf die Innenseite des Schlauchs zu bringen. Zudem entsteht ein Formschluss zwischen Steg und Durchgangsöffnung, da die Außenkontur des Steges der Innenkontur der Durchgangsöffnung entspricht.

Zum Herstellen des erfindungsgemäßen Schlauchs kann der Schlauch 1 zumindest im Bereich des Endabschnitts 5 mit einem Kühlmedium abgekühlt werden. Dadurch erfährt der Schlauch eine Schrumpfung in radialer Richtung. Anschließend wird er in die Form zum Spritzgießen eingesetzt und die Kupplungseinrichtung 2 an den Schlauch angespritzt. Dadurch, dass der Abstand der ersten beiden Halteabschnitte kleiner ist als die Wandstärke des Schlauches im Ausgangszustand, wird nach dem Anspritzen der Kupplungseinrichtung ein Kraftschluss zwischen Schlauch und Kupplung erzeugt. Dieser Kraftschluss ermöglicht ein dauerhaftes Anbinden der Kupplungseinrichtung an den Schlauch 1. Alternativ kann der Schlauch 1 im Endbereich des Endabschnitts auch mit einer Drahtwicklung anstelle des Abkühlens formstabilisiert werden. Der Draht ist dabei unter Spannung auf die Außenseite 4 des Schlauches gewickelt, wodurch der Draht Einschnürungen auf der Außenseite 4 des Schlauches hervorruft. Nach dem Formstabilisieren wird der Schlauch wiederum in die Form eingesetzt und kann die Kupplungseinrichtung an den Schlauch angespritzt werden. Die durch den aufgewickelten Draht hervorgerufenen Einschnürungen führen zu einem Formschluss zwischen Kupplungseinrichtung und Schlauch 1, da die Kupplungseinrichtung während des Anspritzens die Außenkontur des Schlauches und somit auch der Drahtwicklung annimmt.

Selbstverständlich kann der erfindungsgemäße Schlauch an seinen beiden Enden mit einer Kupplungseinrichtung 2 versehen werden.

Der erfindungsgemäße Schlauch mit angebrachter Kupplungseinrichtung eignet sich für die Großserienherstellung. Er ermöglicht dadurch niedrige Kosten bei der Herstellung und genügt gleichzeitig den Anforderungen bei Dichtheit und Stabilität. Spritzgießen ermöglicht zudem auch komplexere Formen mit Hinterschneidungen.

## Patentansprüche

1. Schlauch aus flexiblem Material mit einer Kupplungseinrichtung, die an dessen zumindest einem Endabschnitt (5) dauerhaft angebracht ist, die einen zylindermantelförmigen Halteabschnitt (7) aufweist, der an die Außenkontur des Schlauches (1) angepasst ist und den Schlauch wenigstens abschnittsweise in Axialrichtung überlappt, wobei die Kupplungseinrichtung (2) zumindest abschnittsweise aus thermoplastischem Kunststoff besteht und an dem Schlauch durch Spritzgießen angebracht ist, die Kupplungseinrichtung einen zweiten Halteabschnitt (14) an der Innenseite des Schlauchs aufweist und der erste und der zweite Halteabschnitt über einen sich durch eine Durchgangsöffnung im Schlauch erstreckenden Steg einstückig miteinander verbunden sind, **dadurch gekennzeichnet, dass** auch der zweite Halteabschnitt zylindermantelförmig ist.

2. Schlauch mit einer Kupplungseinrichtung nach Anspruch 1, **dadurch gekennzeichnet, dass** die Kupplungseinrichtung vollständig aus thermoplastischem Kunststoff besteht.

3. Schlauch mit einer Kupplungseinrichtung nach Anspruch 2, **dadurch gekennzeichnet, dass** der thermoplastische Kunststoff ein Polyamid ist.

4. Schlauch mit einer Kupplungseinrichtung nach Anspruch 2, **dadurch gekennzeichnet, dass** der thermoplastische Kunststoff aus Polyphtalamid (PPA), Polyethylensulfid (PPS) oder ein verstärkter Kunststoff ist.

5. Schlauch mit einer Kupplungseinrichtung nach einem der vorangegangenen Ansprüche, **dadurch gekennzeichnet, dass** zwischen Halteabschnitt (7) und Schlauch (1) ein Haftvermittler vorgesehen ist.

6. Schlauch mit einer Kupplungseinrichtung nach einem der vorangegangenen Ansprüche, **dadurch gekennzeichnet, dass** der Schlauch mehrschichtig aufgebaut ist, wobei die dem Halteabschnitt benachbarte Schicht aus einem mit der Kupplungseinrichtung stoffschlüssig verbindbaren Kunststoff besteht.

7. Schlauch mit einer Kupplungseinrichtung nach einem der vorangegangenen Ansprüche, **dadurch gekennzeichnet, dass** der Abstand zwischen den beiden Halteabschnitten (7,14) geringer ist als die Wandstärke des Schlauchs vor dem Anbringen der Kupplungseinrichtung.

8. Schlauch mit einer Kupplungseinrichtung nach einem der vorangegangenen Ansprüchen, **dadurch gekennzeichnet, dass** der Schlauch zylinderrohrförmig ist.

9. Schlauch mit einer Kupplungseinrichtung nach Anspruch 1, **dadurch gekennzeichnet, dass** die Außenkontur des Steges im Wesentlichen der Innenkontur der Durchgangsöffnung entspricht.

10. Schlauch mit einer Kupplungseinrichtung nach Anspruch 1 oder 9, **dadurch gekennzeichnet, dass** die Durchgangsöffnung im Wesentlichen zylindrisch ist.

11. Schlauch mit einer Kupplungseinrichtung nach einem der vorangegangenen Ansprüche, **dadurch gekennzeichnet, dass** die Kupplungseinrichtung eine Rastelementeinrichtung, vorzugsweise eine Rastnase aufweist.

12. Schlauch mit einer Kupplungseinrichtung nach einem der vorangegangenen Ansprüche, **dadurch gekennzeichnet, dass** der Schlauch an seiner Außen- und/oder Innenseite im Bereich des Endabschnitts Vorsprünge oder Vertiefungen aufweist.

13. Verfahren zum Herstellen eines flexiblen Schlauchs mit einer Kupplungseinrichtung (2) nach Anspruch 1, **dadurch gekennzeichnet, dass** der Schlauch (1) vor dem Anspritzen der Kupplungseinrichtung (2) formstabilisiert wird.

14. Verfahren nach Anspruch 13, **dadurch gekennzeichnet, dass** das Formstabilisieren durch Kühlen erfolgt.

15. Verfahren nach Anspruch 12 oder 13, **dadurch gekennzeichnet, dass** das Formstabilisieren durch Umwickeln des Endabschnitts mit einem Draht unter Spannung erfolgt.

16. Verfahren nach zumindest einem der vorhergehenden Ansprüche 13 bis 15, **dadurch gekennzeichnet, dass** zwischen Halteabschnitt (7) und Schlauch (1) ein Haftvermittler vorgesehen ist.

## Claims

1. Tube of flexible material having a coupling device, which is permanently fitted on at least one end portion (5) of the tube and comprises a cylinder-envelope-shaped retaining portion (7), which is adapted to the external contour of the tube (1) and at least in sections overlaps the tube in axial direction, wherein the coupling device (2) is made at least in sections of thermoplastic polymer and is fitted on the tube by means of injection moulding, the coupling device comprises a second retaining portion (14) on the inside of the tube, and the first and the second retaining portion are integrally connected to one another by a web that extends through a through-hole in the tube, **characterized in that** the second retaining portion is also cylinder-envelope-shaped.

2. Tube having a coupling device according to claim 1, **characterized in that** the coupling device is made entirely of thermoplastic polymer.

3. Tube having a coupling device according to claim 2, **characterized in that** the thermoplastic polymer is a polyamide.

4. Tube having a coupling device according to claim 2, **characterized in that** the thermoplastic polymer is of polyphthalamide (PPA), polyethylene sulphide (PPS) or is a reinforced plastics material.

5. Tube having a coupling device according to one of the preceding claims, **characterized in that** a bonding agent is provided between retaining portion (7) and tube (1).

6. Tube having a coupling device according to one of the preceding claims, **characterized in that** the tube is composed of a plurality of layers, wherein the layer adjacent to the retaining portion is made of a plastics material that is cohesively connectable to the coupling device.

7. Tube having a coupling device according to one of the preceding claims, **characterized in that** the distance between the two retaining portions (7, 14) is smaller than the wall thickness of the tube prior to the fitting of the coupling device.

8. Tube having a coupling device according to one of the preceding claims, **characterized in that** the tube is cylindrical-tube-shaped.

9. Tube having a coupling device according to claim 1, **characterized in that** the external contour of the web corresponds substantially to the internal contour of the through-hole.

10. Tube having a coupling device according to claim 1 or 9, **characterized in that** the through-hole is substantially cylindrical.

11. Tube having a coupling device according to one of the preceding claims, **characterized in that** the coupling device comprises a detent element device, preferably a detent lug.

12. Tube having a coupling device according to one of the preceding claims, **characterized in that** the tube on its outside and/or inside has projections or recesses in the region of the end portion.

13. Method of manufacturing a flexible tube having a coupling device (2) according to claim 1, **characterized in that** the tube (1) is dimensionally stabilized prior to injection-moulding of the coupling device (2) thereon.

14. Method according to claim 13, **characterized in that** the dimensional stabilizing is effected by cooling.

15. Method according to claim 12 or 13, **characterized in that** the dimensional stabilizing is effected by wrapping a wire under tension around the end portion.

16. Method according to at least one of the preceding claims 13 to 15, **characterized in that** a bonding agent is provided between retaining portion (7) and tube (1).

## Revendications

1. Tuyau en matériau souple pourvu d'un dispositif d'accouplement qui est fixé solidement à au moins une partie d'extrémité (5) du tuyau et qui présente une partie de fixation cylindrique (7) adaptée au contour extérieur du tuyau (1) et couvrant le tuyau au moins partiellement dans le sens axial, étant précisé que le dispositif d'accouplement (2) se compose au moins par tronçons de matière plastique thermoplastique et est fixé au tuyau par moulage par injection, qu'il comporte une seconde partie de fixation (14) sur le côté intérieur du tuyau et que les première et seconde parties de fixation sont reliées d'une seule pièce par une patte qui s'étend à travers une ouverture de passage prévue dans le tuyau,
**caractérisé en ce que** la seconde partie de fixation est cylindrique elle aussi.

2. Tuyau pourvu d'un dispositif d'accouplement selon la revendication 1, **caractérisé en ce que** le dispositif d'accouplement est entièrement en matière plastique thermoplastique.

3. Tuyau pourvu d'un dispositif d'accouplement selon la revendication 2, **caractérisé en ce que** la matière plastique thermoplastique est un polyamide.

4. Tuyau pourvu d'un dispositif d'accouplement selon la revendication 2, **caractérisé en ce que** la matière plastique thermoplastique est un polyphtalamide (PPA), un poly(sulfure d'éthylène) (PPS) ou une matière plastique renforcée.

5. Tuyau pourvu d'un dispositif d'accouplement selon l'une des revendications précédentes, **caractérisé en ce qu'**il est prévu un agent adhésif entre la partie de fixation (7) et le tuyau (1).

6. Tuyau pourvu d'un dispositif d'accouplement selon l'une des revendications précédentes, **caractérisé en ce que** le tuyau a une structure multicouche, la couche qui est voisine de la partie de fixation se composant d'une matière plastique apte à être venue de matière avec le dispositif d'accouplement.

7. Tuyau pourvu d'un dispositif d'accouplement selon l'une des revendications précédentes, **caractérisé en ce que** l'écartement entre les deux parties de fixation (7, 14) est inférieur à l'épaisseur de paroi du tuyau avant la fixation du dispositif d'accouplement.

8. Tuyau pourvu d'un dispositif d'accouplement selon l'une des revendications précédentes, **caractérisé en ce que** le tuyau a la forme d'un tube cylindrique.

9. Tuyau pourvu d'un dispositif d'accouplement selon la revendication 1, **caractérisé en ce que** le contour extérieur de la patte correspond sensiblement au contour intérieur de l'ouverture de passage.

10. Tuyau pourvu d'un dispositif d'accouplement selon la revendication 1 ou 9, **caractérisé en ce que** l'ouverture de passage est sensiblement cylindrique.

11. Tuyau pourvu d'un dispositif d'accouplement selon l'une des revendications précédentes, **caractérisé en ce que** le dispositif d'accouplement comporte un dispositif à élément d'encliquetage, de préférence une saillie d'encliquetage.

12. Tuyau pourvu d'un dispositif d'accouplement selon l'une des revendications précédentes, **caractérisé en ce que** le tuyau présente sur son côté extérieur et/ou intérieur, dans la zone de sa partie d'extrémité, des parties saillantes ou des creux.

13. Procédé pour fabriquer un tuyau flexible pourvu d'un dispositif d'accouplement (2) selon la revendication 1, **caractérisé en ce que** le tuyau (1) subit une stabilisation de sa forme avant que le dispositif d'accouplement (2) soit rapporté par moulage par injection.

14. Procédé selon la revendication 13, **caractérisé en ce que** la stabilisation de forme se fait par refroidissement.

15. Procédé selon la revendication 12 ou 13, **caractérisé en ce que** la stabilisation de forme se fait grâce à l'enroulement d'un fil métallique sous tension sur la partie d'extrémité.

16. Procédé selon l'une au moins des revendications 13 à 15 précédentes, **caractérisé en ce qu'**un agent adhésif est prévu entre la partie de fixation (7) et le tuyau (1).
